**Europäisches Patentamt**

**European Patent Office**

**Office européen des brevets**

(19)

(11) **EP 1 380 825 A1**

(12) **EUROPÄISCHE PATENTANMELDUNG**

(43) Veröffentlichungstag:
**14.01.2004 Patentblatt 2004/03**

(51) Int Cl.⁷: $G01L\ 9/00$

(21) Anmeldenummer: **03006457.0**

(22) Anmeldetag: **21.03.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **13.07.2002 DE 10231727**

(71) Anmelder: **ROBERT BOSCH GMBH
70442 Stuttgart (DE)**

(72) Erfinder: **Muchow, Joerg
72124 Pliezhausen (DE)**

(54) **Mikromechanische Drucksensorvorrichtung und entsprechende Messanordnung**

(57)   Die Erfindung schafft eine mikromechanische Drucksensorvorrichtung (1; 200), insbesondere für Messungen von niedrigen Absolutdrücken und/oder geringen Differenzdrücken, umfassend: einen Rahmen (2), der zumindest teilweise durch ein Halbleitermaterial gebildet ist, eine von dem Rahmen (2) gehaltene Membran (3), mindestens einen Messwiderstand (5, 6, 8, 9, 11, 12, 14, 15), der an einem ersten Ort in oder auf der Membran (3) angeordnet ist und dessen Widerstandswert von druckinduzierten mechanischen Spannungen in der Membran (3) abhängt, und mindestens einen Kompensationswiderstand (7, 10), der an einem zweiten Ort in oder auf der Membran (3) angeordnet ist und dessen Widerstandswert von druckinduzierten mechanischen Spannungen in der Membran (3) abhängt, wobei sich der Widerstandswert am ersten Ort mit einem ersten linearen Anteil und einem ersten quadratischen Anteil in Abhängigkeit vom Druck ändert und sich der Widerstandswert an dem zweiten Ort näherungsweise ohne einen linearen Anteil und mit einem zweiten quadratischen Anteil, der zum ersten quadratischen Anteil proportional ist, in Abhängigkeit vom Druck ändert.

FIG. 1

EP 1 380 825 A1

**Beschreibung**

STAND DER TECHNIK

Die vorliegende Erfindung betrifft eine mikromechanische Drucksensorvorrichtung und eine entsprechende Messanordnung.

Aus der DE 197 01 055 A1 ist ein mikromechanischer Drucksensor bekannt, der einen Rahmen aus einem Halbleitersubstrat und eine auf dem Rahmen angeordnete Membran aufweist. Auf der Membran sind vier piezoresistive Messwiderstände angebracht, die bei einer Deformation der Membran bzw. der Widerstände (infolge eines Differenzdrucks zwischen der Oberseite und der Unterseite der Membran) ihren Widerstandswert ändern. Jeweils zwei der vier Widerstände liegen parallel zueinander in der Nähe der Mitten der Begrenzungslinien der Membran. Ferner weist der Drucksensor vier Kompensationswiderstände auf, wovon jeweils zwei parallel zueinander und senkrecht zu den Messwiderständen auf dem Rahmen des Drucksensors angeordnet sind. Alle Widerstände bilden eine Wheatstonesche Messbrücke, wobei deren Ausgangssignale an einander diagonal gegenüberliegenden Ecken des Sensors abgegriffen werden.

Die Ausgangsspannung der Messbrücke als Funktion des Differenzdrucks zwischen den beiden Seiten der Membran zeigt insbesondere bei der Messung geringer Differenzdrücke eine unerwünschte Nichtlinearität.

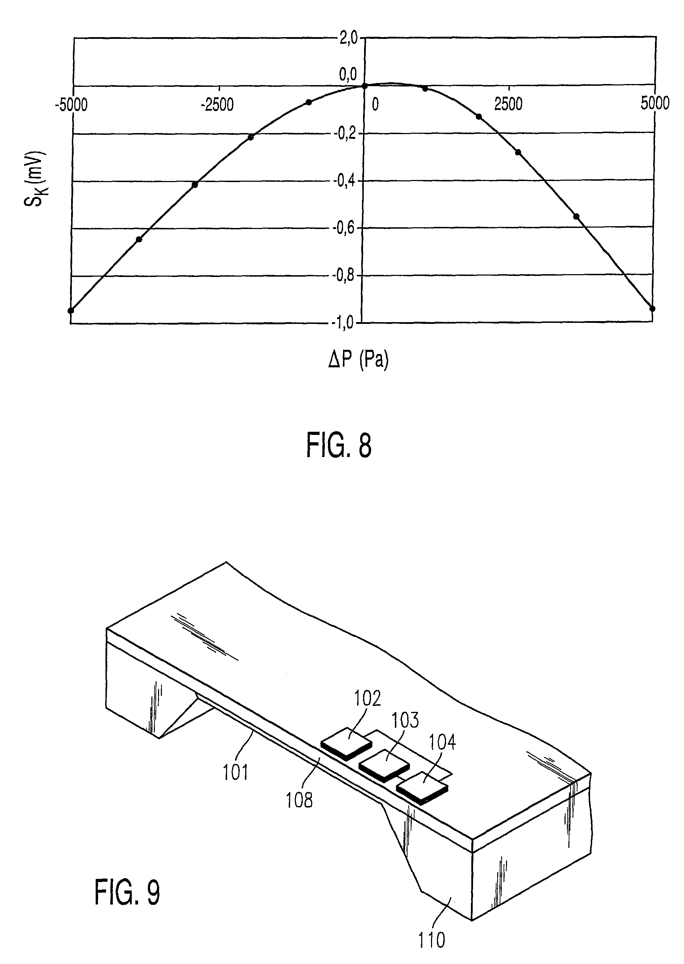

Aus der EP 0 833 137 A2 ist eine mikromechanische Drucksensorvorrichtung bekannt, welche mit Bezug auf Fig. 9 näher erläutert wird. In Fig. 9 bezeichnet Bezugszeichen 110 ein Halbleitersubstrat, in dem eine Membran 101 gebildet ist. Auf der Membran 101 und dem umgebenden Substrat 110 ist eine Epitaxieschicht 108 gebildet, die als Unterlage für Wandler 102, 103, z.B. in Form von Piezowiderständen, dient. Die Wandler wandeln eine Spannung, welche von einer Verformung der Membran 101 aufgrund eines Differenzdrucks herrührt, in ein elektrisches Signal, das einer Kompensationsschaltung 104 zugeführt wird. Der erste Wandler 103 ist an einem spannungsbelasteten Ort angeordnet, an dem er ein Signal mit einer linearen und einer nicht-linearen Komponente in Abhängigkeit vom Differenzdruck erzeugt. Der zweite Wandler 102 ist an einem spannungsunbelasteten Ort angeordnet, an dem er ein Signal mit keiner linearen und der nicht-linearen Komponente in Abhängigkeit vom Differenzdruck erzeugt. Die Kompensationsschaltung 104 addiert die Signale der beiden Wandler 102, 103, um die nicht-linearen Komponente zu eliminieren.

Aus der WO 01/40751 A1 ist eine weitere mikromechanische Drucksensorvorrichtung, insbesondere für Messungen von niedrigen Absolutdrücken und/oder geringen Differenzdrücken, bekannt. Sie umfasst einen Rahmen, der zumindest teilweise durch ein Halbleitermaterial gebildet ist, eine von dem Rahmen gehaltene Membran, mindestens einen Messwiderstand, der an einem ersten Ort in oder auf der Membran angeordnet ist und dessen Widerstandswert von der Verformung der Membran abhängt, und mindestens einen Kompensationswiderstand, der an einem zweiten Ort in oder auf der Membran angeordnet ist und dessen Widerstandswert von der Verformung der Membran abhängt. Bei einer Verformung der Membran treten Biegespannungen und Membranspannungen auf, wobei die Biegespannungen eine räumliche Verteilung auf der Membran aufweisen. Am ersten Ort treten näherungsweise maximale Biegespannungen auf, und an dem zweiten Ort treten näherungsweise minimale Biegespannungen auf.

Bisher ging man im Stand der Technik der EP 0 833 137 A2 und der WO 01/40751 also davon aus, dass ein optimaler Ort für den oder die Membran-Kompensationswiderstände in der Membran derjenige ist, an dem eine "minimale" Biegespannung der Membran gegeben ist. Gemeint war hiermit offensichtlich eine Nullstelle der radialen Biegespannung $\sigma_1$ unter Vernachlässigung des Einflusses der tangentialen Biegespannung $\sigma_t$, denn ein Ort an dem beide gleichzeitig Null sind, lässt sich nicht auffinden.

Die der vorliegenden Erfindung zugrundeliegende Problematik besteht darin, dass dieser Ansatz für den Ort des oder der Membran-Kompensationswiderstände zu unzufriedenstellenden Ergebnissen führt, d.h. die Nicht-Linearität der Ausgangskennlinie der betreffenden Drucksensoren nicht hinreichend beseitigt.

VORTEILE DER ERFINDUNG

Die erfindungsgemässe mikromechanische Drucksensorvorrichtung mit den Merkmalen des Anspruchs 1 bzw. die entsprechende Messanordnung nach Anspruch 9 haben den Vorteil, dass die unerwünschte Nichtlinearität, insbesondere bei geringen Differenzdrücken (zwischen 0 und 50 mbar), besser kompensierbar ist, wodurch Druckmessungen mit der erfindungsgemässen mikromechanischen Drucksensorvorrichtung präziser durchgeführt werden können.

Die der vorliegenden Erfindung zugrundeliegende Idee besteht darin, neben der radialen Spannung auch die tangentiale Spannung zu berücksichtigen, welche ebenfalls auf die relative Widerstandsänderung wirkt. Hinsichtlich der Lage des oder der Kompensationswiderstände resultiert daraus eine Verschiebung in Richtung Membranmitte im Vergleich zum Stand der Technik.

Daraus resultierend ändert sich der Widerstandswert am ersten Ort mit einem ersten linearen Anteil und einem ersten quadratischen Anteil in Abhängigkeit vom Druck und ändert sich der Widerstandswert an dem zweiten Ort näherungsweise ohne einen linearen Anteil und mit einem zweiten quadratischen Anteil, der zum ersten quadratischen Anteil proportional ist, in Abhängigkeit vom Druck ändert. Die Proportionalität resultiert im allgemeinen Fall aus der unterschiedlichen Empfindlichkeit und ist durch eine entsprechende elektronische Verstärkung abgleichbar.

In den abhängigen Ansprüchen finden sich vorteilhafte Weiterbildungen und Verbesserungen des jeweiligen Gegenstandes der Erfindung.

Da auch das Ausgangssignal der aus den Messwiderständen gebildeten Wheatstoneschen Messbrücke ein nichtlineares, insbesondere quadratisches Abhängigkeitsverhältnis vom Differenzdruck zeigt, kann das Ausgangssignal der Wheatstoneschen Messbrücke durch das Ausgangssignal der Kompensationsbrücke unmittelbar oder mittelbar nach einer Umwandlung der jeweiligen Ausgangssignale in eine andere elektrische Grösse, wie zum Beispiel ein elektrischer Strom, kompensiert werden. Durch einen entsprechenden Abgriff der Ausgangsspannung der Kompensationsbrücke erhält man eine Spannung als Funktion des Differenzdrucks, die ein umgekehrtes Vorzeichen in bezug auf die Ausgangsspannung der Wheatstoneschen Messbrücke aufweist. Hierdurch lässt sich die Kompensation der quadratischen Abhängigkeit der Ausgangsspannung der Wheatstonesche Messbrücke in technisch besonders einfacher Weise realisieren, worauf nachfolgend noch näher eingegangen werden wird.

Besonders vorteilhaft ist es, auf der Membran vier Messwiderstände anzuordnen, welche als Wheatstonesche Messbrücke verschaltet sind und das Ausgangssignal dieser Wheatstoneschen Messbrücke mit dem Ausgangssignal einer weiteren Wheatstoneschen Messbrücke zu kompensieren, wobei die weitere Wheatstonesche Messbrücke, eine sogenannte Kompensationsbrücke, durch zwei in der Membran vorgesehene Kompensationswiderstände und zwei in dem Rahmen des Sensors angeordnete Rahmenwiderstände gebildet ist.

Zur Erhöhung der Empfindlichkeit ist es von Vorteil, die Messwiderstände jeweils an einem solchen Ort der Membran vorzusehen, der eine maximale longitudinale bzw. eine maximale transversale Biegespannung zur Stromrichtung der Membran erfährt, wodurch eine maximale Widerstandsänderung herbeigeführt wird. Im Niederdruckbereich zeigt eine solche aus den Messwiderständen gebildete Wheatstonesche Messbrücke eine Nichtlinearität als Funktion des Drucks von etwa 1 bis 2 Prozent.

Bei einem bevorzugten Ausführungsbeispiel erfolgt die Kompensation durch Subtraktion der jeweils in elektrische Ströme umgewandelten Ausgangsspannungen der Wheatstoneschen Messbrücke und der Kompensationsbrücke. Hierzu wird das Ausgangssignal der Wheatstoneschen Messbrücke, eine druckabhängige elektrische Spannung, einem ersten Spannungs-/Stromwandler (UI-Wandler) zugeführt und das Ausgangssignal der Kompensationsbrücke, ebenfalls eine druckabhängige elektrische Spannung, einem zweiten Spannungs-/Stromwandler. Die von den zwei UI-Wandlern erzeugten Ströme weisen ein umgekehrtes Vorzeichen auf und durch die Subtraktion der zwei elektrischen Ströme ergibt sich ein resultierender elektrischer Strom, dessen Stromstärke einen weitgehend linearen Verlauf als Funktion des Drucks zeigt.

Zur Gewährleistung der Linearität der erfindungsgemässen Drucksensorvorrichtung ist bei einer erfindungsgemässen Ausführungsform vorgesehen, das Ausgangssignal der Kompensationsbrücke bzw. eine dem Ausgangssignal der Kompensationsbrücke entsprechende elektrische Grösse, wie insbesondere ein zum Ausgangssignal bzw. zur Ausgangsspannung proportionaler elektrischer Strom, zu verstärken und die verstärkte elektrische Grösse zur Kompensation der Nichtlinearität der Wheatstoneschen Messbrücke zu verwenden. Damit lassen sich die verschiedenen Vorfaktoren des quadratischen Anteils berücksichtigen.

Bevorzugt erfolgt die Verstärkung des Ausgangssignals der Kompensationsbrücke bzw. der diesem Signal adäquaten elektrischen Grösse um einen solchen Faktor, dass das durch die verstärkte elektrische Grösse kompensierte Ausgangssignal der Wheatstoneschen Messbrücke (bzw. der diesem Ausgangssignal adäquaten elektrischen Grösse) ein weitgehend lineares Verhalten zeigt. Es versteht sich, dass die aus dem nichtlinearen Ausgangssignal der Kompensationsbrücke gebildete und zur Kompensation herangezogene elektrische Grösse nicht zu stark zu verstärken ist, um eine Überkompensation und eine hieraus resultierende Nichtlinearität zu vermeiden.

Weiterhin ist es besonders vorteilhaft, wenn der Rahmen der Drucksensorvorrichtung und vorzugsweise auch die Membran ganz oder teilweise durch Silizium gebildet werden, da dieses Material die Integration von Sensorelement und Messanordnung bzw. Auswerteelektronik auf einem Chip ermöglicht.

Schliesslich ist es noch besonders vorteilhaft, den Rahmen und die Membran aus einem Silizium-Substrat herzustellen, das in einer (100)-Orientierung verwendet wird. Hierdurch lässt sich die Membran in einfacher Weise durch Ätzen des Silizium-Substrats mit einer Kaliumhydroxidätze herstellen. Zudem weist ein Silizium-Substrat mit dieser Orientierung zwei [011]-Richtungen in der Substratoberfläche auf, in denen die Leitfähigkeit besonders empfindlich auf die Deformation der Membran reagiert. Bevorzugt werden die Messwiderstände und die Kompensationswiderstände durch lokal dotierte Bereiche in der Membran bzw. im Rahmen gebildet.

Zur Reduzierung der Stromaufnahme der erfindungsgemässen mikromechanischen Drucksensorvorrichtung ist es besonders vorteilhaft, wenn die Messwiderstände und/oder die Kompensationswiderstände einen elektrischen Widerstand aufweisen, der grösser als 1 k$\Omega$ ist.

ZEICHNUNGEN

Die Erfindung wird nachfolgend anhand von nicht notwendigerweise massstäblichen Zeichnungen näher erläutert, wobei gleiche Bezugszeichen gleiche oder gleichwirkende Schichten oder Teile bezeichnen. Es zeigen:

Fig. 1   eine Darstellung des Prinzips der erfindungsgemässen mikromechanischen Drucksensorvorrichtung in Draufsicht;

Fig. 2   eine bevorzugte Ausführungsform einer erfindungsgemässen mikromechanischen Drucksensorvorrichtung in Draufsicht;

Fig. 3   den erfindungsgemässen Drucksensor der Fig. 2 entlang der Schnittlinie A - B der Fig. 2 im Querschnitt;

Fig. 4   ein Blockschaltbild einer Kompensationsschaltung zur Verwendung beim der erfindungsgemässen mikromechanischen Drucksensorvorrichtung;

Fig. 5   eine weitere Ausführungsform einer erfindungsgemässen mikromechanischen Drucksensorvorrichtung in Draufsicht;

Fig. 6   eine schematische Darstellung der erfindungsgemässen Anordnung der Kompensationswiderstände im Vergleich zur Anordnung bei der aus der EP 0 833 137 A2 oder der WO 01/40751 bekannten Drucksensorvorrichtung;

Fig. 7   eine Darstellung des Ausgangssignals $S_K$(mV) der Drucksensorvorrichtung mit gemäss der Lehre der EP 0 833 137 A2 angeordneten Kompensationswiderständen in Abhängigkeit vom anliegenden Differenzdruck $\Delta$P (bar);

Fig. 8   eine Darstellung des Ausgangssignals $S_K$(mV) der Drucksensorvorrichtung mit erfindungsgemäss angeordneten Kompensationswiderständen in Abhängigkeit vom anliegenden Differenzdruck $\Delta$P (bar); und

Fig. 9   eine aus der EP 0 833 137 A2 bekannte Drucksensorvorrichtung.

BESCHREIBUNG DER AUSFÜHRUNGSBEISPIELE

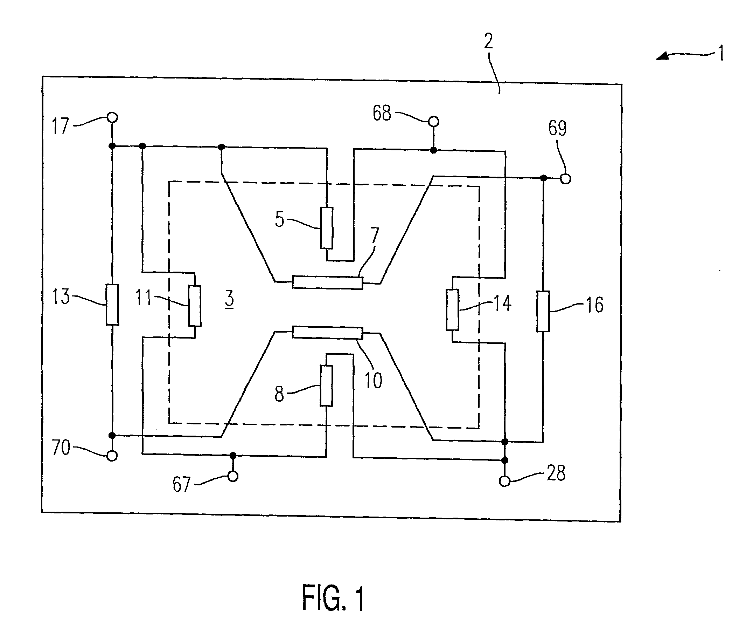

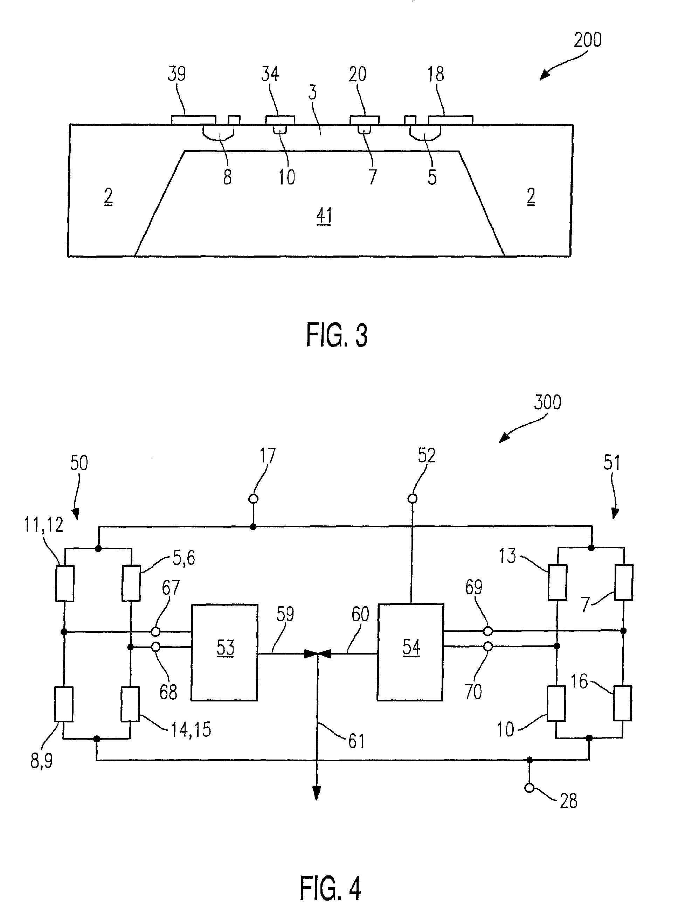

Der in Fig. 1 in einer Prinzip-Darstellung abgebildete Drucksensor 1 weist einen aus einem Silizium-Substrat gebildeten Rahmen 2 und eine vom Rahmen an dessen Deckfläche gehaltene Membran 3 auf.
Der Rahmen 2 und die Membran 3 werden aus einem Silizium-Substrat durch Maskierung und nachfolgende Ätzung der Rückseite des in Fig. 1 dargestellten Drucksensors 1 gebildet. Vorzugsweise wird eine Kaliumhydroxid-Ätze (KOH-Ätze) zur Herstellung einer sich in Richtung auf die Unterseite der Membran 3 verjüngenden pyramidenstumpfförmigen Aussparung mit trapezförmigem Querschnitt verwendet - zur Aussparung vgl. die Aussparung 41 in Fig. 3. Die pyramidenstumpfförmige Aussparung unterhalb der Membran 3 ergibt sich bei der bevorzugten Verwendung eines Silizium-Substrats, das eine (100)-Orientierung aufweist, weil eine KOH-Ätze unterschiedliche Ätzraten in der [100]- und der [110]-Kristall-Richtung von Silizium zeigt.
Die bevorzugt rechteckige Membran 3, die in Fig. 1 durch ein Quadrat mit gestricheltem Umriss bzw. Membrankanten dargestellt ist, weist typischerweise eine Dicke von ca. 5 bis 80 μm auf. Eine Membrankante "trennt" den Rahmen 2 von der Membran 3.
Es versteht sich, dass die Membran in Abhängigkeit von dem konkreten Einsatzzweck eines erfindungsgemässen Drucksensors auch dünner oder dicker sein kann. Ebenso ist es möglich die erfindungsgemässen Konzepte auf Membranen anzuwenden, die Bereiche mit unterschiedlicher Dicke aufweisen. Beispiele solcher Membranen sind Membranen mit biegesteifem Zentrum (sogenannte Boss-Membranen) und/oder mit biegesteifen Randbereichen. Ferner kann es zweckmässig sein einen erfindungsgemässen Drucksensor zu verwenden, der eine Membran aufweist, die einen anderen Umriss hat.
Die erfindungsgemässe Membran 3 gemäss Fig. 1 weist einen Messwiderstand 5, einen Kompensationswiderstand 7, einen Messwiderstand 8 und einen Kompensationswiderstand 10 sowie zwei weitere Messwiderstände 11 und 14 auf. Ausserhalb der Membran 3 sind auf dem Rahmen 2 zwei weitere Kompensationswiderstände 13 und 16 vorgesehen.
Eine Möglichkeit zur Herstellung eines unter der Membran liegenden Widerstands besteht darin, in eine n-dotierte Membran p⁻-dotierte Bereiche (Basisdiffusion) einzudiffundieren. Nachfolgend wird dann eine epitaktische Schicht aufgewachsen und die Membran mittels eines sogenannten pn-Stops geätzt.

Bei den Widerständen handelt es sich bevorzugt um piezoresistive Widerstände mit einem - in Draufsicht - weitgehend rechteckigen Umriss, deren Widerstandswert sich bei einer mechanischen Verformung des Widerstands bzw. der Membran am Ort des betreffenden Widerstands ändert. Bevorzugt werden die Widerstände durch geeignet dotierte Bereiche der Membran gebildet.

Es versteht sich, dass anstelle eines Maskierungs- und nachfolgenden Dotierungs-Prozessschritts der Membran auch anders gebildete Widerstände verwendet werden können, deren Widerstandswert ebenfalls von der Verformung des betreffenden Widerstands abhängt und die beispielsweise auf, in oder unter der Membran vorgesehenen sind. Ein auf oder unter der Membran vorgesehener Widerstand könnte beispielsweise durch eine Maskierung der Membran im Bereich des herzustellenden Widerstands und nachfolgendes Beschichten mit einem geeigneten Material erzeugt werden. Ebenso kann ein "vergrabener" Widerstand in der Membran erzeugt werden.

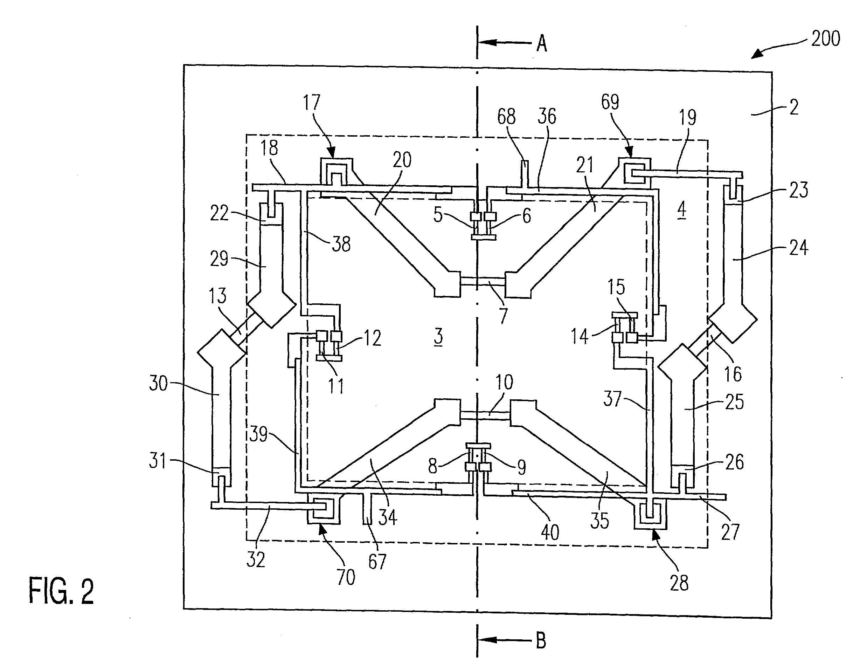

Wie insbesondere aus der nachfolgenden Funktionsbeschreibung deutlich werden wird, ist die anschliessend beschriebene Geometrie des erfindungsgemässen Drucksensors lediglich eine bevorzugte Ausführungsform der Erfindung. So können die in der Fig. 2 auf dem Umriss eines gedachten, abgerundeten Rechtecks liegenden Kompensationswiderstände 7 und 10 jeweils auch auf einem anderen Punkt eines solchen Umrisses liegen. Bei einer quadratischen Membran wäre der betreffende Umriss in etwa ein abgerundetes Quadrat und für eine kreisförmige Membran ein Kreis.

Wenn man die in Fig. 1 dargestellte Membran 3 mit dem Ziffernblatt einer Uhr vergleicht, so weist die Längsachse des Messwiderstands 5, der wie alle anderen piezoresistiven Widerstände - in Draufsicht - einen weitgehend rechteckigen Umriss aufweist, in Richtung "zwölf Uhr" und ist in der Nähe der oberen Membrankante der Membran 3 in diese eingebracht.

Die Längsachse des Kompensationswiderstands 7 verläuft quer zur Längsachse des Messwiderstands 5 und eine gedachte Mittelsenkrechte auf dessen Längsachse deckt sich in etwa mit der Längsachse des Messwiderstands 5. Der Kompensationswiderstand 7 ist etwas ausserhalb der Mitte der Membran 3 zwischen dem Zentrum der Membran 3 und dem Messwiderstand 5 in diese eingebracht.

Der in die Membran 3 eingebrachte Messwiderstand 14 ist gegenüber dem Messwiderstand 5 parallel verschoben und eine gedachte Mittelsenkrechte auf der Längsachse des Messwiderstand 14 weist mit ihrem einen Ende etwa in Richtung auf das Zentrum der Membran 3 und mit ihrem anderen Ende etwa in Richtung "drei Uhr". Der Messwiderstand 14 befindet sich etwas entfernt von der rechten Membrankante der Membran 3 in dieser. Der Messwiderstand 8 ist derart angeordnet, dass sich die Längsachse des Messwiderstands 5 in etwa mit der Längsachse des Messwiderstands 8 deckt und er ist weitgehend spiegelsymmetrisch zum Messwiderstand 5 auf der gegenüberliegenden Seite der Membran 3 angeordnet.

Eine gedachte Mittelsenkrechte auf der Längsachse des Kompensationswiderstands 10 deckt sich in etwa mit der Längsachse des Messwiderstands 8, d.h. der Kompensationswiderstand 10 verläuft quer zum Messwiderstand 8. Der zum Kompensationswiderstand 7 weitgehend parallel bzw. spiegelsymmetrisch angeordnete Kompensationswiderstand 10 ist zwischen dem Messwiderstand 8 und dem Zentrum der Membran 3 angeordnet.

Der Messwiderstand 11 in der Membran 3 verläuft weitgehend parallel und auf gleicher Höhe wie der Messwiderstand 14. Er ist weitgehend spiegelsymmetrisch zum Messwiderstand 14 auf der - in bezug auf den Messwiderstand 14 - gegenüberliegenden Seite der Membran 3 in der Nähe der linken Membrankante der Membran 3 in diese eingebracht.

Parallel zum Messwiderstand 14 ist der Kompensationswiderstand 16 auf dem Rahmen 2 des Drucksensors 1 angeordnet. Auf der gegenüberliegenden Seite des Rahmens 2 befindet sich der Kompensationswiderstand 13 auf dem Rahmen 2 des Drucksensors 1, wobei dessen Längsachse weitgehend parallel zur Längsachse des Messwiderstands 11 verläuft. Der Kompensationswiderstand 13 befindet sich in etwa auf gleicher Höhe wie der Messwiderstand 11.

Wie im Zusammenhang mit Fig. 4 näher erläutert werden wird, bilden die Messwiderstände 5 und 14 sowie die Messwiderstände 11 und 8 jeweils einen Zweig einer Messbrücke (vgl. die Position 50 in Fig. 4), d.h. der Messwiderstand 11 ist mit dem Messwiderstand 8 und der Messwiderstand 5 ist mit dem Messwiderstand 14 in Reihe geschaltet. Ferner bilden die Kompensationswiderstände 13 und 10 sowie die Kompensationswiderstände 7 und 16 jeweils einen Zweig einer Kompensationsbrücke (vgl. die Position 51 in Fig. 4), d.h. der Kompensationswiderstand 13 ist mit dem Kompensationswiderstand 10 und der Kompensationswiderstand 7 ist mit dem Kompensationswiderstand 16 in Reihe geschaltet.

Der aus den Messwiderständen 11 und 8 sowie der aus den Messwiderständen 5 und 14 jeweils gebildete Zweig der Messbrücke sind zueinander parallel geschaltet.

Ebenso sind die aus den Kompensationswiderständen 13 und 10 sowie 7 und 16 gebildeten Zweige der Kompensationsbrücke parallel geschaltet.

Ein Kontaktfeld 17 zum Anschluss der Versorgungsspannung des erfindungsgemässen Drucksensors 1 steht mit dem Eingang der Messbrücke, der durch die parallel verschalteten Messwiderstände 11 und 5 gebildet wird, in einer elektrischen Verbindung. Ferner steht das Kontaktfeld 17 mit dem Eingang der Kompensationsbrücke, der durch die parallel geschalteten Kompensationswiderstände 13 und 7 gebildet ist, in einer elektrischen Verbindung. Kontaktfelder 68 und 67 bilden den Ausgang der Messbrücke und Kontaktfelder 69 und 70 bilden den Ausgang der Kompensationsbrücke. An die Kontaktfelder 17 und 28 wird die Spannungsversorgung für den erfindungsgemässen Drucksensor 1 angeschlossen, worüber die Mess- und Kompensationsbrücke jeweils mit elektrischer Spannung versorgt wird. Das Kontaktfeld 28 ist der sogenannte Brückenfusspunkt.

Über ein Kontaktfeld 67, das mit der Leitung verbunden ist, die die Reihenschaltung der Messwiderstände 11 und 8 bewirkt sowie über ein Kontaktfeld 68, das mit der Leitung in einer elektrischen Verbindung steht, die die Messwiderstände 5 und 14 in Reihe schaltet, kann die an den Messausgängen der Messbrücke (50) anliegende elektrische Spannung vom Sensor 1 abgegriffen und der in Fig. 4 dargestellten Kompensationsschaltung 300 zugeführt werden.

Ebenso steht die elektrische Leitung, die die Kompensationswiderstände 13 und 10 in Reihe schaltet, mit einem Kontaktfeld 69 in einer elektrischen Verbindung. Ein Kontaktfeld 70 steht mit der elektrischen Leitung in Verbindung, die die Reihenschaltung der Kompensationswiderstände 13 und 10 bewirkt. Über die Kontaktfelder 69 und 70 kann die an den Messausgängen der Kompensationsbrücke (51) anliegende elektrische Spannung vom Sensor 1 abgegriffen und der in Fig. 4 dargestellten Kompensationsschaltung 300 zugeführt werden.

Die Kontaktfelder 17, 68, 69, 28, 67 und 70 sind auf dem Rahmen 2 des in Fig. 1 dargestellten Drucksensors 1 angeordnet. Die elektrischen Verbindungen zwischen den Kontaktfeldern und den Widerständen bzw. zwischen den unterschiedlichen Widerständen wird vorzugsweise durch niederohmige Leiterbahnen erreicht, deren Verschaltung mit den Widerständen in Fig. 1 schematisch und in Fig. 2 in einer konkreten Ausgestaltung dargestellt sind. Vorzugsweise werden die Leiterbahnen bzw. elektrischen Verbindungen zur Bildung der Messbrücke und der Kompensationsbrücke durch Bedampfung der Oberseite des Rahmens 2 und der Membran 3 mit einem Metall, wie z. B. mit Aluminium, Kupfer, Gold oder Platin, erreicht.

Es versteht sich, dass der erfindungsgemässe Drucksensor weitere Schichten aufweisen kann.

In Fig. 2 ist das Layout einer bevorzugten Ausführungsform des in Fig. 1 schematisch dargestellten erfindungsgemässen Drucksensors in Draufsicht dargestellt. Das in Fig. 2 dargestellte Layout des Drucksensors 200 ist, soweit nachfolgend nicht anders angegeben, identisch mit dem in Fig. 1 dargestellten Drucksensor 1.

Insbesondere weicht der in Fig. 2 dargestellte Drucksensor 200 von dem in Fig. 1 dargestellten Drucksensor 1 darin ab, dass der Messwiderstand 5 der Fig. 1 in Fig. 2 durch zwei Messwiderstände 5 und 6, der Messwiderstand 14 durch zwei Messwiderstände 14 und 15, der Messwiderstand 8 durch zwei Messwiderstände 8 und 9 und der Messwiderstand 11 durch zwei Messwiderstände 11 und 12 gebildet ist. Indem an den sogenannten ersten Orten der Membran, an denen die longitudinale und auch transversale Biegespannung der Membran maximal ist, anstelle eines Messwiderstands eine Reihenschaltung aus jeweils zwei Messwiderständen 5, 6; 14, 15; 8, 9; und 11, 12 vorgesehen ist, ist es in technisch einfacher Weise möglich, einen aus zwei in Reihe geschalteten Messwiderständen gebildeten Widerstand der Messbrücke 50 zu bilden, der einen hohen Widerstandswert, vorzugsweise von mindestens ein $k\Omega$, aufweist. Hierdurch lässt sich die Stromaufnahme eines erfindungsgemässen Drucksensors deutlich reduzieren. Ferner ist es durch die Reihenschaltung von zwei Messwiderständen möglich, "einen" hochohmigen Messwiderstand durch geeignete Dotierung der Membran 3 des Drucksensors 200 herzustellen.

Ferner lässt sich durch die erfindungsgemässe Verwendung von zwei Messwiderständen der "Offset" minimieren und das Verhältnis des Piezowiderstands zum Widerstand der Zuleitungen maximieren, wodurch sich eine maximale Empfindlichkeit der Messanordnung ergibt.

Dementsprechend sind die in Fig. 4 als einzelne Widerstände der Wheatstoneschen Messbrücke 50 dargestellten Widerstände, entsprechend der bevorzugten Ausführungsform des in Fig. 2 dargestellten Drucksensors 200, tatsächlich jeweils zwei in Reihe geschaltete Messwiderstände.

Ein weiterer Unterschied des in Fig. 2 dargestellten Drucksensors 200 gegenüber dem in Fig. 1 dargestellten Drucksensor 1 besteht darin, dass die auf dem Rahmen 2 des Drucksensors 200 angeordneten Rahmenwiderstände 13 und 16 jeweils nicht parallel zu den Messwiderständen 11 und 14 verlaufen. Diese sind zwar auch etwa auf gleicher Höhe wie die benachbarten, auf der Membran 3 befindlichen Messwiderstände 11, 12 bzw. 14, 15 angeordnet, jedoch ist die Längsachse der Rahmenwiderstände jeweils um 45° im Uhrzeigersinn gegenüber der Längsachse des jeweils benachbarten Messwiderstands verdreht.

Es versteht sich, dass sich die Ausrichtung der Rahmenwiderstände 13 und 16 auf dem Rahmen 2 an der konkreten Kristallorientierung des Rahmens bzw. des Halbleitersubstrats, aus dem der Drucksensor hergestellt wird, orientiert. Entscheidend ist, dass die Ausrichtung derart erfolgt, dass die Rahmenwiderstände piezounempfindlich gegen eventuell auftretende geringe Verformungen des Rahmens sind, wodurch sich eine höhere Messgenauigkeit erreichen lässt.

Die auf dem Rahmen 2 angeordneten Kompensationswiderstände 13 und 16 liegen etwa je zur Hälfte auf dem Teil des Rahmens, der durch das nicht geätzte Silizium-Substrat gebildet ist und zur anderen Hälfte auf dem Übergangsbereich 4 zwischen dem Silizium-Substrat und der Membran 3. Hierdurch lässt sich zudem eine platzsparende Anordnung erreichen, so dass die Fläche des insgesamt benötigten Silizium-Substrats minimiert bzw. der eingesparte Platz zur vollständigen oder teilweisen Realisierung der in Fig. 4 dargestellten Kompensationsschaltung auf dem Rahmen 2 verwendet werden kann.

Bei Betrachtung der Fig. 2 fällt auf, dass die Kontaktfelder 17, 69, 28 und 70 etwa an den Ecken der Membran auf der Oberseite des Drucksensors 200 im Übergangsbereich 4 angeordnet sind. Damit ergibt sich in vorteilhafter Weise eine übersichtliche Möglichkeit zum externen Anschluss des Drucksensors 200 an eine Spannungsversorgung sowie die Möglichkeit des Abgriffs der Spannung an den Messausgängen der Kompensationsbrücke. An dieser Anordnung der Kontaktfelder ist ferner von Vorteil, dass der Anschluss des Drucksensors 200 ohne negative Auswirkungen auf das Deformationsverhalten der Membran 3 möglich ist. Ebenso sind auf der Oberseite des Drucksensors 200 im Übergangsbereich 4 Kontaktzungen 67 und 68 vorgesehen, über die sich die Spannung an den Messausgängen der aus den Messwiderständen gebildeten Wheatstoneschen Messbrücke abgreifen und ebenfalls, wie die Signale bzw. wie die Spannung an den Messausgängen der Kompensationsbrücke 51 über die Kontaktflächen 69 und 70, der in Fig. 4 dargestellten Kompensationsschaltung 300 zuführen lassen.

Ferner sind die die Messwiderstände verbindenden Leiterbahnen überwiegend, soweit möglich, parallel zur jeweiligen Membrankante in deren unmittelbarer Nähe auf dem Übergangsbereich 4 angeordnet. Dadurch können die Leiterbahnen, die die Messwiderstände verbinden, möglichst kurz und damit niederohmig gehalten werden.

Soweit nötig, verlaufen die Leiterbahnen, die die auf dem Rahmen 2 angeordneten Kompensationswiderstände 13 und 16 mit der Kompensationsbrücke verbinden, auf der linken bzw. rechten Seite des Rahmens und weisen im Unterschied zu den Leiterbahnen, die die Messwiderstände verbinden, einen grösseren Abstand zu den jeweils benachbarten Membrankanten auf.

Nachfolgend wird das Layout der Verschaltung der Leiterbahnen des Drucksensors 200 detaillierter beschrieben. Das Kontaktfeld 17 steht über eine Zuleitung 20 mit dem einen Anschluss des Kompensationswiderstands 7 in Verbindung. Der andere Anschluss des Kompensationswiderstands 7 ist mit dem Kontaktfeld 69 über eine Zuleitung 21 verbunden. Das Kontaktfeld 69 ist über eine Leiterbahn 19 mit einer Verbindungsstelle 23 elektrisch verbunden, die ihrerseits mit dem einen Anschluss des Kompensationswiderstands 16 über eine Leiterbahn 24 verbunden ist. Der andere Anschluss des Kompensationswiderstands 16 ist über eine Zuleitung 25 mit einer Kontaktstelle 26 verbunden. Die Kontaktstelle 26 steht über eine Leiterbahn 27 mit einem Kreuzungspunkt in Verbindung, der seinerseits durch eine Leiterbahn gebildet ist, die mit einer Leiterbahn 37 in Verbindung steht, die einen Anschluss des Messwiderstands 14 kontaktiert. Ferner steht der Kreuzungspunkt mit einer Leiterbahn 40 in Verbindung, die einen Anschluss des Messwiderstands 9 elektrisch kontaktiert. Schliesslich steht der Kreuzungspunkt noch mit dem Kontaktfeld 28 in einer elektrischen Verbindung, das seinerseits mit einem Anschluss des Kompensationswiderstands 10 über eine Leiterbahn 35 verbunden ist. Der andere Anschluss des Kompensationswiderstands 10 ist über eine Leiterbahn 34 mit dem Kontaktfeld 70 verbunden, dass seinerseits wiederum über eine Leiterbahn 32 mit einer Kontaktstelle 31 in einer elektrischen Verbindung steht. Eine Leiterbahn 30 verbindet die Kontaktstelle 31 mit einem Anschluss des Kompensationswiderstands 13. Der andere Anschluss des Kompensationswiderstands 13 steht über eine Leiterbahn 29, Kontaktstelle 22 und nachfolgend über eine Leiterbahn 18 mit dem Kontaktfeld 17 in einer elektrischen Verbindung, wodurch schliesslich die Kompensationsbrücke 51 gebildet ist.

Das Kontaktfeld 17 steht zudem über die Leiterbahn 18 mit einem Anschluss des Messwiderstands 5 in Verbindung, dessen anderer Anschluss über eine Kontaktbrücke mit einem Anschluss des Messwiderstands 6 verbunden ist. Der andere Anschluss des Messwiderstands 6 ist über eine Leiterbahn 36 mit einem Anschluss des Messwiderstands 15 verbunden. Die Leiterbahn 36 ist mit der Kontaktzunge 68 versehen, die von der Membran 3 weg nach oben in den Übergangsbereich 4 zeigt. Der andere Anschluss des Messwiderstands 15 ist über eine Kontaktbrücke mit einem Anschluss des Messwiderstands 14 verbunden. Der andere Anschluss des Messwiderstands 14 wird von der Leiterbahn 37 kontaktiert. Die mit der Leiterbahn 37 verbundene Leiterbahn 40 kontaktiert einen Anschluss des Messwiderstands 9, der über eine Kontaktbrücke mit einem Anschluss des Messwiderstands 8 verbunden ist. Der andere Anschluss des Messwiderstands 8 steht mit einem Anschluss des Messwiderstands 11 über eine Leiterbahn 39 in einer elektrischen Verbindung. Die Leiterbahn 39 besteht zum Teil aus der Kontaktzunge 67, die von der Membran 3 weg nach unten in den Übergangsbereich 4 zeigt. Der andere Anschluss des Messwiderstands 11 ist über eine Kontaktbrücke mit einem Anschluss des Messwiderstands 12 verbunden, dessen anderer Anschluss über eine Leiterbahn 38 mit der Leiterbahn 18 und dem Kontaktfeld 17 elektrisch verbunden ist, wodurch schliesslich die Messbrücke 50 gebildet ist.

Die Zuleitungen 20, 21, 35 und 34, die die auf der Membran 3 vorgesehenen Kompensationswiderstände 7 und 10 kontaktieren, verlaufen jeweils etwa diagonal über einen Teil der Membran 3, bevor sie die Kompensationswiderstände 7 und 10 kontaktieren.

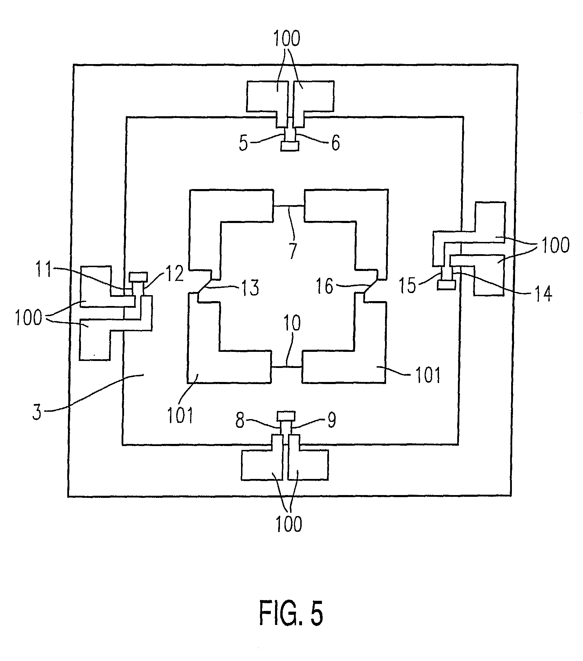

In der Figur 5 wird eine Aufsicht auf ein weiteres Ausführungsbeispiel des erfindungsgemässen Drucksensors gezeigt. Mit den Bezugszeichen 5, 6, 8, 9, 11, 12, 14, 15, werden wieder Messwiderstände bezeichnet, die den Messwiderständen wie sie zur Figur 2 bereits beschrieben wurden entsprechen. Diese Messwiderstände sind wieder in einem Randbereich der Membran angeordnet, in dem die durch Biegespannungen auftretenden Widerstandsänderungen maximal sind. Weiterhin werden noch Kompensationswiderstände 7, 10, 13, 16 gezeigt, wobei die Kompensationswiderstände 7 und 10 den Kompensationswiderständen 7 und 10 entsprechen, die in der Figur 2 bereits beschrieben wurden. Weiterhin sind auf der Membran nach der Figur 5 noch Kompensationswiderstände 13 und 16 vorgesehen, die den Kompensationswiderständen 13 und 16 der Figur 2 entsprechen, aber im Unterschied zur Figur 2 in der Figur 5 auf der Membran 3 angeordnet sind. Die Membran besteht aus einkristallinem Silizium und alle Widerstände sind durch eine entsprechende Dotierung in dem Silizium gebildet. Diese Variante ist besonders platzsparend.

Wie bereits zur Figur 2 beschrieben wurde, sind die Messwiderstände 5, 6, 8, 9, 11, 12, 14, 15 und die Kompensationswiderstände 7 und 10 parallel zu Seiten der rechteckigen Membran 3 angeordnet. Diese Widerstände sind somit in einer Kristallrichtung des Siliziums gelegen, in der der elektrische Widerstand von inneren mechanischen Spannungen abhängt (piezoresistiver Effekt). Die Kompensationswiderstände 13 und 16 sind jedoch mit einem Winkel von 45° zu den rechteckigen Seitenwänden der Membran 3 orientiert. Aufgrund dieser Ausrichtung sind die Kompensationswiderstände 13 und 16 in einer Kristallrichtung der einkristallinen Siliziummembran 3 gelegen, in der die Abhängigkeit des Widerstands von mechanischen Spannungen in der einkristallinen Siliziummembran 3 minimal ist. Die Messwiderstände 5, 6, 8, 9, 11, 12, 14, 15 und die Kompensationswiderstände 7, 10 sind jedoch in Kristallrichtungen gelegen, in denen ein deutlicher piezoresistiver Effekt auftritt, d.h. der Widerstand dieser Elemente hängt stark von internen mechanischen Spannungen in der einkristallinen Siliziummembran 3 ab. Die Messwiderstände und Kompensationswiderstände werden wieder zu Brücken verschaltet, wie dies in der Figur 4 gezeigt und in der dazugehörigen Beschreibung beschrieben wird. Die Verbindung zwischen den einzelnen Elementen wird jedoch in der Figur 5 im Unterschied zur Figur 2 aus Vereinfachungsgründen nicht dargestellt. Es werden nur schematisch Anschlussbereiche 100 für die Messwiderstände gezeigt, die eine Kontaktierung der Messwiderstandselemente erlauben. Für die Kompensationswiderstände 7, 10, 13, 16 werden schematisch Verbindungsbereiche 101 gezeigt, durch die die Widerstände auf der Membran 3 miteinander verbunden werden. Es wird jedoch nicht dargestellt, wie die Kontaktierung nach aussen hin erfolgt. Aufgrund der Ausrichtung der Kompensationswiderstände 13 und 16 in einer Richtung in der kein piezoresistiver Effekt auftritt verhalten sich diese Widerstände so als wenn sie auf dem Rahmen angeordnet wären, d.h. sie zeigen keine oder nur eine vernachlässigbar geringe Widerstandsänderung infolge einer Verformung der Membran.

Nachfolgend wird die Funktion des erfindungsgemässen Drucksensors 1 und 200, wie er beispielhaft in den Figuren 1, 2, 3 und 5 dargestellt ist, näher erläutert.

Die relative Widerstandsänderung eines in der Membran des erfindungsgemässen Drucksensors angeordneten piezoresistiven Widerstands als Funktion des Differenzdrucks zwischen den zwei Seiten der Membran kann näherungsweise unter Vernachlässigung von Termen dritter und höherer Ordnung wie folgt beschrieben werden:

$$\Delta R/R_0 \sim a(x,y,z)\,\Delta p + b\,(\Delta p)^2 \qquad\qquad (1)$$

mit:

$\Delta R/R_0$ = relative Widerstandsänderung eines piezoresistiven Widerstands als Funktion des Differenzdrucks zwischen den zwei Seiten der Membran;

$\Delta p$ = der Differenzdruck zwischen den beiden Seiten der Membran;

x,y,z = die räumlichen Koordinaten des (der Einfachheit halber auf einen einzigen Punkt reduzierten) konkreten Orts des piezoresistiven Widerstands in bezug auf die Membran;

a = ein Faktor, der vom betreffenden piezoresistiven Widerstand, seinem Ort in bezug auf die konkrete Membran, der konkreten Membran und dem konkreten Sensor abhängt;

b = ein ortsunabhängiger Faktor, der vom betreffenden piezoresistiven Widerstand, seinem Ort in bezug auf die konkrete Membran, der konkreten Membran und dem konkreten Sensor abhängt;

$a(x,y,z)\,\Delta p$ = ortsabhängiger linearer Anteil an der relativen Widerstandsänderung infolge einer Änderung der radialen und tangentialen Biegespannung;

$b\,(\Delta p)^2$ = ortsunabhängiger quadratischer Anteil an der relativen Widerstandsänderung infolge der Änderung der ortsunabhängigen Membranspannung.

Typischerweise ist der Faktor b des quadratischen Terms der vorstehenden Gleichung (1) deutlich kleiner als der Faktor a des linearen Terms der relativen Widerstandsänderung eines in einer Membran angeordneten piezoresistiven Widerstands als Funktion des Differenzdrucks zwischen den zwei Seiten der Membran. Ist der Differenzdruck zwischen den beiden Seiten der Membran relativ gering, ist die relative Widerstandsänderung weitgehend durch den linearen Term der Gleichung (1) bestimmt.

Wird nun jedoch ein piezoresistiver Widerstand in einem mikromechanischen Drucksensor zur Messung eines Drucks im Niederdruckbereich verwendet, bei dem erfindungsgemässen Drucksensor typischerweise ein Bereich von etwa 0 bis 50 mbar, und trennt die Membran den Niederdruckbereich beispielsweise vom Vakuum, so wird der quadratische Term der Gleichung mit zunehmendem Differenzdruck, d.h. in diesem Beispiel dem Anstieg der Druckdifferenz von etwa 0 auf etwa 50 mbar, merklich gegenüber dem linearen Term der Gleichung. Dasselbe gilt beispielsweise entsprechend auch für eine Situation, bei der auf der einen Seite der Membran Normaldruck bzw. Atmosphärendruck herrscht und auf der anderen Seite der Membran ein Druck, der im Bereich von etwa 0 bis 50 mbar höher oder niedriger ist.

Hieraus ergibt sich, dass die Widerstandskennlinie des piezoresistiven Widerstands mit zunehmendem Differenzdruck ein (in der Regel unerwünschtes) nicht-lineares Verhalten zeigt.

Ein erster wesentlicher Aspekt der Erfindung zur Lösung dieses Problems besteht darin, den bzw. die in die Membran eines erfindungsgemässen mikromechanischen Drucksensors eingebrachten Messwiderstände (siehe die Figuren 1, 2 und 3) in ihrer Form und in ihren Abmessungen derart zu bemessen, dass sie jeweils an solchen Stellen bzw. Orten der Membran in diese eingebracht werden können, an denen die Gesamtspannung, die sich im wesentlichen aus der linearen Biegespannung und der quadratischen Membranspannung zusammensetzt, gross, vorzugsweise weitgehend maximal, ist.

Indem der bzw. die Messwiderstände an dieser Stelle bzw. an diesen Stellen der Membran angeordnet sind, ergibt sich im Unterschied zu anderen Stellen der Membran, die diese Eigenschaften nicht aufweisen, eine hohe, bevorzugt eine weitgehend maximale relative Widerstandsänderung als Funktion des Differenzdrucks zwischen der Oberseite und der Unterseite der Membran und damit eine verbesserte Möglichkeit zur Messung des Differenzdrucks über die Auswertung der relativen Widerstandsänderung.

Ein zweiter wesentlicher Aspekt der Erfindung zur Lösung des genannten Problems der Nichtlinearität besteht darin, einen oder mehrere Membran-Kompensationswiderstände (siehe die Figuren 1, 2 und 3), in ihrer Form und in ihren Abmessungen so zu gestalten, dass diese jeweils an einer Stelle bzw. einem Ort der Membran angeordnet werden können, an dem fast ausschliesslich die quadratisch mit dem Differenzdruck verlaufende Membranspannung auf den betreffenden Membran-Kompensationswiderstand wirkt.

Bisher ging man im Stand der Technik der EP 0 833 137 A2 und der WO 01/40751 davon aus, dass ein optimaler Ort für den oder die Membran-Kompensationswiderstände in der Membran derart gewählt werden sollte, dass an ihm eine "minimale" Biegespannung der Membran gegeben ist. Gemeint war hiermit offensichtlich ein Minimum der radialen Biegespannung $\sigma_1$, welche sich ausdrücken lässt als:

$$\sigma_1 = \text{const. x } \Delta P \text{ x } (1-3(2x/l)^2) \tag{2}$$

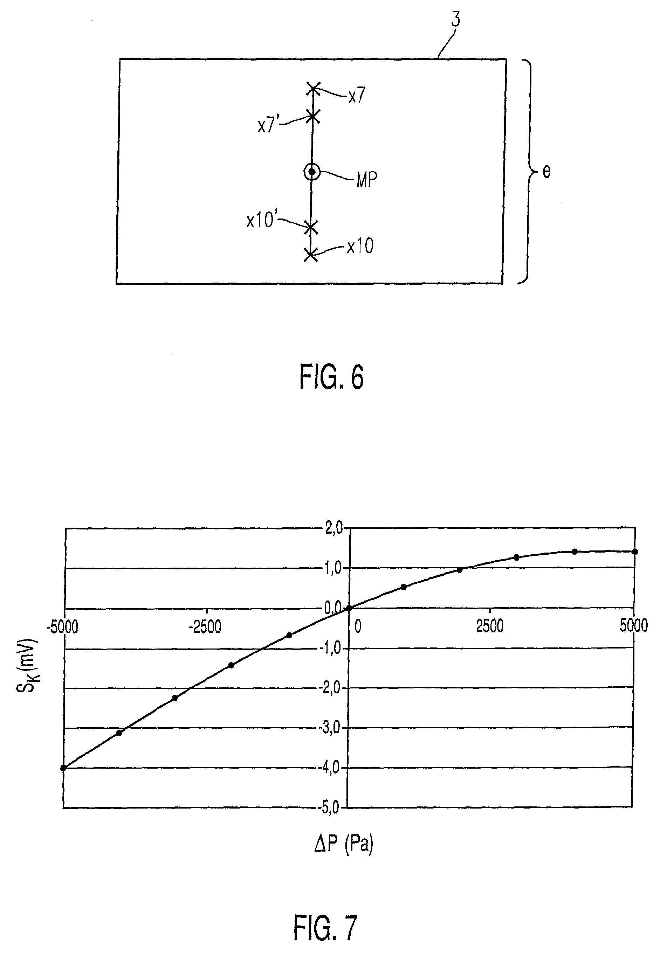

wobei l die Länge der Membran und $\Delta P$ den Differenzdruck bezeichnet. Die Variable x ist der Abstand von der Membranmitte (vgl. Fig. 6).

Die Nullstelle der radialen Biegespannung $\sigma_1$ gemäss Gleichung (2) ist gegeben durch

$$x/(l/2) = (1/3)^{0.5} \approx 0{,}58 \tag{3}$$

x bezeichnet dabei den Abstand von der Mitte der Membran.

Die Orte, an denen verschwindende radiale Biegespannungen in der Membran gegeben sind, werden nun anhand der Figur 3 erläutert. In der Figur 3 wird ein Querschnitt durch ein Drucksensorelement gezeigt. Wenn es zu einer Verformung der Membran 3 nach oben in der Figur 3 kommt, so werden die Messwiderstände 8 und 5, die auf der Oberseite der Membran 3 liegen, mit Druckspannungen beaufschlagt. Zwischen diesen beiden Widerständen in etwa in der Mitte der Membran wird die Oberseite der Membran mit Zugspannungen beaufschlagt, d.h. bei einer Verformung nach oben hin weist die Membran auf ihrer Oberseite im Randbereich Druckspannungen und in der Mitte Zugspannungen auf. Zwischen diesen Bereichen mit Druckspannungen und Zugspannungen ist eine neutrale Zone gegeben, in der keine radialen Biegespannungen auftreten. An diesen Orten werden gemäss dem Stand der Technik die Kompensationswiderstände angeordnet, die dann nicht mit Biegespannungen beaufschlagt werden.

Wenn die Membran, wie sie in der Figur 3 gezeigt wird, nach unten verformt wird, so werden die Randbereiche der Membran, in der die Messwiderstände 5 und 8 angeordnet sind, mit Zugspannungen beaufschlagt und ein mittlerer Bereich der Membran wird mit Druckspannungen beaufschlagt. Zwischen diesen Zugund Druckspannungen gibt es wiederum einen Bereich, in dem auf der Oberseite der Membran keine Biegespannungen auftreten und in der dann entsprechend die Kompensationswiderstände 7 und 10 angeordnet werden.

Für das konkrete Layout eines Sensors gemäss dem Stand der Technik muss natürlich der Ort bestimmt werden, an dem auf der Oberseite der Membran gerade keine radialen Biegespannungen auftreten.

Fig. 6 zeigt eine schematische Darstellung der erfindungsgemässen Anordnung der Kompensationswiderstände im Vergleich zur Anordnung bei der aus der EP 0 833 137 A2 oder der WO 01/40751 bekannten Drucksensorvorrichtung.

In Fig. 6 bezeichnen MP den Mittelpunkt der Membran 3, x7 und x10 die x-Abstände der Kompensationswiderstände 7 bzw. 10 vom Mittelpunkt der Membran MP bei der aus der EP 0 833 137 A2 oder der WO 01/40751 bekannten Drucksensorvorrichtung, welche sich aus obiger Gleichung (2) berechnen.

x7' und x10' sind die x-Abstände der Kompensationswiderstände 7 bzw. 10 vom Mittelpunkt der Membran MP bei der erfindungsgemässen Drucksensorvorrichtung, welche geringer sind als x7 bzw. x10.

Für einen typischen Niederdrucksensor mit l = 1800 μm ergibt sich z.B. x7'/l = x10'/l = 0,49 als Optimalwert im Vergleich zu 0,58 gemäss Gl. 2.

Fig. 7 ist eine Darstellung des Ausgangssignals $S_K$ (mV) der Drucksensorvorrichtung mit gemäss der Lehre der EP 0 833 137 A2 angeordneten Kompensationswiderständen 7, 10 in Abhängigkeit vom anliegenden Differenzdruck $\Delta P$ (bar), also in den Abständen x7/l = x10/l = 0,58 gemäss Fig. 6.

Deutlich erkennbar ist das Vorhandensein eines linearen Anteils, was bewirkt, dass eine Addition des Messwiderstandssignals und des Kompensationswiderstandssignals nicht zur gewünschten Linearisierung des Messwiderstandssignals führt.

Fig. 8 ist eine Darstellung des Ausgangssignals $S_K$ (mV) der Drucksensorvorrichtung mit erfindungsgemäss angeordneten Kompensationswiderständen in Abhängigkeit vom anliegenden Differenzdruck $\Delta P$ (bar), also in den Abständen x7'/l = x10'/l = 0,49 gemäss Fig. 6.

Deutlich erkennbar ist das nahezu vollständige Fehlen eines linearen Anteils, was bewirkt, dass eine Addition des Messwiderstandssignals und des Kompensationswiderstandssignals zur gewünschten Linearisierung des Messwiderstandssignals führt.

Im Unterschied zum Stand der Technik der EP 0 833 137 A2 und der WO 01/40751 werden erfindungsgemäss die Kompensationswiderstände nicht am Ort gemäss Gleichung (3) angeordnet, sondern an näher am Mittelpunkt MP der Membran 3 liegenden Orten, welche die fast rein quadratische Druckabhängigkeit des Kompensationswiderstandssignals gemäss Fig. 8 aufweisen.

Diese Orte x7' bzw. x10' lassen sich entweder mit Hilfe von Berechnungen, insbesondere finite Elementberechnungen, oder aber empirisch durch Messung bestimmen.

Bei Berechnungen muss der oben angegebene Koeffizient a(x,y,z) für die Druckabhängkeit des Kompensationswiderstandssignals der Koeffizient des linearen Anteils unter Berücksichtigung des Einflusses der radialen Biegespannung $\sigma_1$ und des Einflusses der tangentialen Biegespannung $\sigma_t$ minimiert werden.

Insbesondere nimmt die tangentiale Biegespannung $\sigma_t$ ausgehend von der Mitte der Membran, wo $\sigma_1 = \sigma_t$ gilt, mit dem Quadrat des Kosinus des Abstandes zum Rand der Membran hin ab.

Die relative Widerstandsänderung unter Berücksichtigung der tangentialen Biegespannung $\sigma_t$ ergibt sich zu:

$$\Delta R/R_0 = \pi_1\ \sigma_1 + \pi_t\ \sigma_t \qquad\qquad (4)$$

wobei $\pi_1$ und $\pi_t$ konstante Koeffizienten unterschiedlichen Vorzeichens sind. Daraus ergibt sich, dass durch geeignete Auswahl des Abstandes des Kompensationswiderstandes von der Mitte der Membran ein Ort auffindbar ist, an dem der lineare Anteil a(x,y,z) verschwindet. Dies ist jedoch nicht der Ort, an dem $\sigma_1 = 0$ ist.

Aus Gründen der Vollständigkeit sei erwähnt, dass etwaige nicht in der Membran vorgesehene auf bzw. im Rahmen des Drucksensors angeordnete Rahmenwiderstände weitgehend druckunabhängig sind, weil ein auf die Oberseite oder Unterseite der Membran wirkender Druck allenfalls zu einer sehr geringen Verformung des Rahmens führt, wobei die Verformung des Rahmens gegenüber der Verformung der Membran sehr gering ist. Um jedoch auch die Möglichkeit einer Widerstandsänderung eines piezoresistiven Rahmenwiderstands infolge einer Verformung des Rahmens des Drucksensors weitgehend auszuschliessen, ist bei einer weiteren Ausführungsform der Erfindung vorgesehen, den Rahmenwiderstand derart in bezug auf die Kristallorientierung des Rahmens anzuordnen, dass der Widerstand durch die Verformung des Rahmens nicht beeinflusst wird, d.h. dass dieser eine piezounempfindliche Ausrichtung ggü. der Kristallorientierung des Rahmens aufweist.

Es versteht sich, dass von dem erfindungsgemässen Prinzip auch dann Gebrauch gemacht wird, wenn die Mess- und/oder Kompensationswiderstände lediglich in der Nähe der vorstehend beschriebenen (idealen) Stellen bzw. Orte der Membran bzw. des Rahmens des Drucksensors angeordnet werden.

Aufgrund der vorstehend beschriebenen Verschaltung der an den erfindungsgemässen Stellen der Membran vorgesehenen Messwiderstände zu einer Messbrücke ergibt sich an den Kontaktfeldern 67 und 68, den Ausgängen der Messbrücke, folgende Brückenspannung:

$$U_{Messbrücke} (\Delta p) = ((Rt - R_1) / (R_t + R_1)) U_V \qquad (5)$$

mit:

$U_{Messbrücke}$ = elektrische Spannung infolge des Differenzdrucks $\Delta p$ zwischen den beiden Seiten der Membran zwischen den zwei Zweigen der Messbrücke, die an den Kontaktfeldern 67 und 68 des erfindungsgemässen Drucksensors abgegriffen wird;

$R_t$ = elektrischer Widerstand der piezoresistiven Widerstände der Messbrücke, der von der transversalen Biegespannung an den piezoresistiven Messwiderständen infolge des Differenzdrucks $\Delta p$ zwischen den beiden Seiten der Membran abhängt;

$R_1$ = elektricher Widerstand der piezoresistiven Widerstände der Messbrücke, der von der longitudinalen Biegespannung an den piezoresistiven Messwiderständen infolge des Differenzdrucks $\Delta p$ zwischen den beiden Seiten der Membran abhängt;

$U_v$ = elektrische Spannung der Versorgungsspannung, die an den Kontaktfeldern 17 und 28 des erfindungsgemässen Drucksensors angelegt ist.

Aus dieser Gleichung (5) für die Ausgangsspannung der Messbrücke wird deutlich, dass die Nichtlinearität der einzelnen Widerstände zu einer Nichtlinearität der Brückenspannung der Messbrücke führt.

Die aus zwei druckunabhängigen piezoresistiven Widerständen auf dem Rahmen der Membran und zwei druckabhängigen Kompensationswiderständen an den erfindungsgemässen Stellen auf der Membran des erfindungsgemässen Drucksensors gebildete Kompensationsbrücke weist an den Kontaktfeldern 69 und 70, den Messausgängen der Kompensationsbrücke, eine elektrische Spannung auf, die durch die nachfolgende Gleichung näherungsweise beschrieben werden kann:

$$U_{Kompensationsbrücke} = ((R_{komp} - R_0) / (R_{komp} + R_0)) U_V \qquad (6)$$

mit:

$U_{Kompensationsbrücke}$ = die elektrische Spannung der Kompensationsbrücke infolge des Differenzdrucks $\Delta p$ zwischen den beiden Seiten der Membran, die an den Kontaktfeldern 69 und 70 des erfindungsgemässen Drucksensors abgegriffen wird;

$R_{komp}$ = der elektrische Widerstand der der Kompensationsbrücke;

$R_0 = R_{komp}$ (für $\Delta p = 0$): der elektrische Widerstand der Kompensationsbrücke für einen Differenzdruck $\Delta p = 0$;

$U_v$ = die Versorgungsspannung der Kompensationsbrücke.

Bei entsprechendem elektrischen Anschluss der durch die Kontaktfelder 69 und 70 gebildeten Ausgänge der Kompensationsbrücke sowie der durch die Kontaktfelder 67 und 68 gebildeten Ausgänge der Messbrücke erhält man eine Ausgangsspannung der Kompensationsbrücke ($U_{Kompensationsbrücke}$) als Funktion des Differenzdrucks ($\Delta p$), welche ein umgekehrtes Vorzeichen im Vergleich zur Ausgangspannung der Messbrücke ($U_{Messbrücke}$) aufweist.

Die Kompensationsbrücke hat ferner eine geringere Empfindlichkeit als die Messbrücke, und die Nichtlinearität der Kompensationsbrücke ist deutlich höher als die Nichtlinearität der in der Membran vorgesehenen Messwiderstände bzw. des Ausgangssignals der Messbrücke. Dies ist durch die vorstehend erläuterte Anordnung der Membran-Kompensationswiderstände an jeweils einem Ort der Membran, an dem überwiegend lediglich die Membranspannung (ortsunabhängig und proportional zu $(\Delta p)^2$) auf die Membran-Kompensationswiderstände wirkt, begründet.

Ein wesentlicher Aspekt der Erfindung zur Verminderung der Nichtlinearität der Ausgangsspannung (siehe Fig. 4) der zu einer Messbrücke 50 verschalteten Messwiderstände in der Membran besteht nun darin, den durch einen ersten Spannungs-/ Stromwandler 54 aus der nichtlinearen Ausgangsspannung der Kompensationsbrücke 51 erzeugten ersten elektrischen Strom an dessen Ausgang 60 von dem durch einen zweiten Spannungs-/Stromwandler 53 aus der nichtlinearen Ausgangsspannung der Messbrücke 50 erzeugten zweiten elektrischen Strom an dessen Ausgang 59 zu subtrahieren. Erfindungsgemäss erfolgt die Verschaltung derart, dass der erste elektrische Strom ein umgekehrtes Vorzeichen ggü. dem zweiten elektrischen Strom aufweist und sich die quadratischen Anteile beider Ströme ganz oder teilweise aufheben bzw. kompensieren.

Wie in Fig. 4 dargestellt, wird der zu subtrahierende erste elektrische Strom des Spannungs-/Stromwandlers 54 der Kompensationsbrücke 51 vor der Subtraktion derart verstärkt, dass der Absolutwert des quadratisch mit dem Differenzdruck verlaufenden Anteils des ersten elektrischen Stroms am Ausgang 60 weitgehend dem Absolutwert des quadratisch mit dem Differenzdruck verlaufenden Anteils des zweiten elektrischen Stroms am Ausgang 59 entspricht. Dann ergibt sich ein resultierender elektrischer Strom (siehe die Leitung 61 in Fig. 4), der einen weitgehend linearen Verlauf als Funktion des Differenzdrucks zeigt und zur Bestimmung des Differenzdrucks verwendet wird. Zum Abgleich des Spannungs-/Stromwandlers 54 bzw. zur Verstärkung des ersten elektrischen Stroms vor der Subtraktion der elektrischen Ströme, ist der Spannungs-/Stromwandler 54 mit einem Anschluss 52 zur Zuführung einer einstellbaren Abgleich-Spannung versehen.

Um die Stromaufnahme durch den erfindungsgemässen Drucksensor so gering wie möglich zu halten, weisen die Widerstände bevorzugt einen elektrischen Widerstand auf, der grösser als 1 kΩ ist.

Bezugszeichenliste:

| | |
|---|---|
| 1 | Drucksensor |
| 2 | Rahmen |
| 3 | Membran |
| 4 | Übergangsbereich |
| 5 | Messwiderstand |
| 6 | Messwiderstand |
| 7 | Membran-Kompensationswiderstand |
| 8 | Messwiderstand |
| 9 | Messwiderstand |
| 10 | Membran-Kompensationswiderstand |
| 11 | Messwiderstand |
| 12 | Messwiderstand |
| 13 | Rahmenwiderstand |
| 14 | Messwiderstand |
| 15 | Messwiderstand |
| 16 | Rahmenwiderstand |
| 17 | Kontaktfeld |
| 18 | Leiterbahn |
| 19 | Leiterbahn |
| 20 | Zuleitung |
| 21 | Zuleitung |
| 22 | Kontaktstelle |
| 23 | Verbindungsstelle |
| 24 | Leiterbahn |
| 25 | Leiterbahn |
| 26 | Kontaktstelle |
| 27 | Leiterbahn |
| 28 | Kontaktfeld |
| 30 | Leiterbahn |
| 31 | Kontaktstelle |
| 32 | Leiterbahn |
| 34 | Zuleitung |
| 35 | Zuleitung |

36     Leiterbahn
37     Leiterbahn
38     Leiterbahn
39     Leiterbahn
40     Leiterbahn
41     Aussparung
50     Messbrücke
51     Kompensationsbrücke
52     Anschluss zum Abgleich des Spannungs-/Stromwandlers der Kompensationsbrücke
53     Spannungs-/Stromwandler
54     Spannungs-/Stromwandler
59     Ausgang eines Spannungs-/Stromwandlers
60     Ausgang eines Spannungs-/Stromwandlers
61     Leitung
67     Kontaktzunge
68     Kontaktzunge
69     Kontaktfeld
70     Kontaktfeld
200    Drucksensor
300    Kompensationsschaltung


**Patentansprüche**

1.  Mikromechanische Drucksensorvorrichtung (1; 200), insbesondere für Messungen von niedrigen Absolutdrücken und/oder geringen Differenzdrücken, umfassend:

    einen Rahmen (2), der zumindest teilweise durch ein Halbleitermaterial gebildet ist,

    eine von dem Rahmen (2) gehaltene Membran (3),

    mindestens einen Messwiderstand (5, 6, 8, 9, 11, 12, 14, 15), der an einem ersten Ort in oder auf der Membran (3) angeordnet ist und dessen Widerstandswert von druckinduzierten mechanischen Spannungen in der Membran (3) abhängt, und

    mindestens einen Kompensationswiderstand (7, 10), der an einem zweiten Ort in oder auf der Membran (3) angeordnet ist und dessen Widerstandswert von druckinduzierten mechanischen Spannungen in der Membran (3) abhängt,

    wobei sich der Widerstandswert am ersten Ort mit einem ersten linearen Anteil und einem ersten quadratischen Anteil in Abhängigkeit vom Druck ändert und sich der Widerstandswert an dem zweiten Ort näherungsweise ohne einen linearen Anteil und mit einem zweiten quadratischen Anteil, der zum ersten quadratischen Anteil proportional ist, in Abhängigkeit vom Druck ändert.

2.  Drucksensorvorrichtung nach Anspruch 1,
    **dadurch gekennzeichnet,**

    -   **dass** die Membran (3) mindestens vier Messwiderstände (5, 6, 8, 9, 11, 12, 14, 15) aufweist, die jeweils an einem ersten Ort der Membran angeordnet sind, und
    -   **dass** die an den vier ersten Orten der Membran befindlichen Messwiderstände (5, 6, 8, 9, 11, 12, 14, 15) zu einer ersten Ringschaltung bzw. Wheatstoneschen Messbrücke (50) oder zu einem Messwandler verschaltet sind.

3.  Drucksensorvorrichtung nach einem der vorhergehenden Ansprüche,**dadurch gekennzeichnet,**

    -   **dass** die Membran (3) mindestens zwei Kompensationswiderstände (7, 10) aufweist, die jeweils an einem zweiten Ort der Membran angeordnet sind,
    -   **dass** mindestens zwei weitere Kompensationswiderstände vorgesehen sind, und

- **dass** die Kompensationswiderstände der Membran und die Rahmenwiderstände zu einer zweiten Ringschaltung bzw. Wheatstoneschen Messbrücke bzw. Kompensationsbrücke (51) verschaltet sind.

4. Drucksensorvorrichtung nach Anspruch 3,
   **dadurch gekennzeichnet,**

   - **dass** die mindestens zwei weitere Kompensationswiderstände (13, 16) auf dem Rahmen (2) angeordnet sind.

5. Drucksensorvorrichtung nach Anspruch 3,
   **dadurch gekennzeichnet,**

   - **dass** die mindestens zwei weiteren Kompensationswiderstände (13, 16) auf der Membran (3) angeordnet sind.

6. Drucksensorvorrichtung nach Anspruch 4 oder 5,
   **dadurch gekennzeichnet,**
   **dass** die mindestens zwei weiteren Kompensationswiderstände (13, 16) derart im oder auf dem Rahmen (2) oder der Membran (3) angeordnet sind, dass der elektrische Widerstand der zwei weiteren Kompensationswiderstände (13,16) auch bei einer Verformung weitgehend konstant bleibt.

7. Drucksensorvorrichtung nach einem der Ansprüche 1 bis 6,
   **dadurch gekennzeichnet,**
   **dass** die Messwiderstände (5, 6, 8, 9, 11, 12, 14) und/oder die Kompensationswiderstände (7, 10) und/oder die Rahmenwiderstände (13, 16) piezoresistive Widerstände sind.

8. Drucksensorvorrichtung nach Anspruch 6 oder 7,
   **dadurch gekennzeichnet,**
   **dass** ein piezoresistiver Rahmenwiderstand (13, 16) derart im oder auf dem Rahmen (2) angeordnet ist, dass dieser weitgehend piezounempfindlich gegenüber einer (typischerweise geringen) Verformung des Rahmens ist.

9. Messanordnung (300) zur Messung des Absolutdrucks und/oder des Differenzdrucks, dem eine Drucksensovorrichtung (1; 200) nach einem der Ansprüche 1 bis 8 eingesetzt ist, **gekennzeichnet durch**

   - erste Mittel (53) zur Erfassung der **durch** die Druckdifferenz an mindestens einem Messwiderstand (5, 6, 8, 9, 11, 12, 14, 15) hervorgerufenen Änderung des elektrischen Widerstands,
   - zweite Mittel (54) zur Erfassung der **durch** die Druckdifferenz an mindestens einem Kompensationswiderstand (7, 10) der Membran hervorgerufenen Änderung des elektrischen Widerstands.

10. Messanordnung nach Anspruch 9,
    **dadurch gekennzeichnet,**

    - **dass** die ersten Mittel (53) die durch die Druckdifferenz zwischen den Zweigen einer aus vier Messwiderständen (5, 6, 8, 9, 11, 12, 14, 15) der Membran (3) gebildeten Wheatstoneschen Messbrücke (50) hervorgerufene Spannungsänderung erfassen, und
    - **dass** die zweiten Mittel (54), die durch die Druckdifferenz zwischen den Zweigen einer aus zwei Kompensationswiderständen (7, 10) und zwei Rahmenwiderständen (13, 16) gebildeten Wheatstoneschen Kompensationsbrücke (51) hervorgerufene Spannungsänderung erfassen.

11. Messanordnung nach Anspruch 9 oder 10,
    **dadurch gekennzeichnet,**

    - **dass** die ersten Mittel einen ersten Spannungs-/ Stromwandler (53) aufweisen, über dessen Eingang die durch die Druckdifferenz hervorgerufene Spannungsänderung erfasst ist, wobei über einen Ausgang (59) des ersten Spannungs-/Stromwandlers (53) ein erster elektrischer Strom abgegeben ist, der proportional zur Eingangsspannung am ersten Spannungs-/Stromwandler (53) ist,
    - **dass** die zweiten Mittel (54) einen zweiten Spannungs/Stromwandler (54) aufweisen, über dessen Eingang die durch die Druckdifferenz hervorgerufene Spannungsänderung erfasst ist, wobei über einen Ausgang (60) des zweiten Spannungs/Stromwandlers (54) ein zweiter elektrischer Strom abgegeben ist, der proportional zur Eingangsspannung am zweiten Spannungs-/Stromwandler (54) ist, wobei der zweite elektrische Strom ein gegenüber dem ersten elektrischen Strom umgekehrtes Vorzeichen aufweist, und

-   **dass** eine Kompensationsschaltung den zweiten elektrischen Strom oder einen verstärkten zweiten elektrischen Strom von dem ersten elektrischen Strom subtrahiert.

12. Messanordnung nach Anspruch 11,
    **gekennzeichnet durch**
    einen Verstärker zur Verstärkung des von dem zweiten Spannungs-/Stromwandler (54) abgegebenen zweiten elektrischen Stroms.

FIG. 1

FIG. 2

FIG. 3

FIG. 4

FIG. 5

FIG. 6

FIG. 7

FIG. 8

FIG. 9

**Europäisches Patentamt**

# EUROPÄISCHER RECHERCHENBERICHT

Nummer der Anmeldung

EP 03 00 6457

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 199 57 556 A (BOSCH GMBH ROBERT) 31. Mai 2001 (2001-05-31) * Spalte 3, Zeile 50 - Spalte 4, Zeile 20 * * Spalte 9, Zeile 18 - Spalte 10, Zeile 64 * * Ansprüche 1-12 * --- | 1-12 | G01L9/00 |
| A | US 3 743 926 A (YERMAN A) 3. Juli 1973 (1973-07-03) * Spalte 2, Zeile 37 - Spalte 6, Zeile 39 * --- | 1-12 | |
| A | US 3 772 628 A (UNDERWOOD J ET AL) 13. November 1973 (1973-11-13) * Spalte 3, Zeile 35 - Spalte 5, Zeile 50 * ----- | 1-12 | |

| RECHERCHIERTE SACHGEBIETE (Int.Cl.7) |
|---|
| G01L |

Der vorliegende Recherchenbericht wurde für alle Patentansprüche erstellt

| Recherchenort | Abschlußdatum der Recherche | Prüfer |
|---|---|---|
| MÜNCHEN | 15. Oktober 2003 | Neumann, F |

**EP 1 380 825 A1**

## ANHANG ZUM EUROPÄISCHEN RECHERCHENBERICHT
## ÜBER DIE EUROPÄISCHE PATENTANMELDUNG NR.

EP 03 00 6457

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 19957556 | A | 31-05-2001 | DE | 19957556 A1 | 31-05-2001 |
| | | | WO | 0140751 A1 | 07-06-2001 |
| | | | DE | 10083868 D2 | 28-02-2002 |
| US 3743926 | A | 03-07-1973 | KEINE | | |
| US 3772628 | A | 13-11-1973 | KEINE | | |

EPO FORM P0461

Für nähere Einzelheiten zu diesem Anhang : siehe Amtsblatt des Europäischen Patentamts, Nr.12/82

23